(19) **Europäisches Patentamt / European Patent Office / Office européen des brevets**

(11) **EP 2 423 902 A1**

(12) # EUROPEAN PATENT APPLICATION

(43) Date of publication:
**29.02.2012 Bulletin 2012/09**

(51) Int Cl.:
**G08G 1/16** (2006.01)

(21) Application number: **11178813.9**

(22) Date of filing: **25.08.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.08.2010 SE 1050879**

(71) Applicant: **Scania CV AB (publ)
151 87 Södertälje (SE)**

(72) Inventor: **Sandberg, Tony
SE-645 44 Strängnäs (SE)**

(54) **Safety system and method**

(57) The invention relates to a safety system for a vehicle, which comprises a detection system adapted to monitoring an area around the vehicle; determining the distance between the vehicle and an obstacle ahead, and a relative speed between the vehicle and said obstacle ahead, and generating an obstacle signal which indicates said distance and relative speed; determining the distance between an overtaking vehicle and an obstacle ahead, and a relative speed between the overtaking vehicle and said obstacle ahead, and generating a vehicle signal which indicates said distance and relative speed; a calculation unit adapted to receiving said signals and to calculating at least one threshold value for the speed which the overtaking vehicle needs to enable it to execute an overtaking manoeuvre according to predetermined rules, to comparing the overtaking vehicle's speed with said one or more threshold values and to generating an indicating signal based on said comparison. The invention relates also to a safety method for a vehicle.

FIG. 1

**Description**

Field of the invention

The present invention relates to a safety system and a safety method for traffic situation monitoring during overtaking according to the introduction to the independent claims.

Background to the invention

To enhance traffic safety, attempts are increasingly being made to separate traffic moving in opposite directions. In Sweden and also in other countries, so-called 2+1 roads with wire barriers are increasingly common. A 2+1 road is a type of road which alternates between having one or two traffic lanes in a given direction. A central barrier, often a wire barrier, separates traffic moving in opposite directions.

A problem with roads of this type is that they cause the speed of cars to become uneven. There is a tendency to travel more slowly when there is only one lane, but faster in order to overtake slower vehicles such as trucks when there are two lanes. When the lanes subsequently merge, there may well be potential hazard situations due to cars trying to overtake "just one more truck". This entails substantial risk of dangerous situations and collisions.

Potential hazard situations may also arise during overtaking when a vehicle in the other lane approaches the driver's vehicle. An approaching vehicle trying to overtake the driver's vehicle may then need to swerve and change lanes quickly, potentially placing the driver's vehicle in a perilous situation.

There are a number of solutions with regard to how traffic safety during overtaking can be improved. For example, CN 1502502 (see abstract) describes a warning method for preventing collisions during overtaking. A wireless network is used to communicate positions of vehicles, and if a following vehicle comes too close to a vehicle ahead, a warning signal is emitted.

EP 1887541 describes a system for identifying traffic lanes and monitoring vehicles in them. The distances between the driver's vehicle and other vehicles may be presented on a screen.

JP2005149402 describes a system which assesses whether it is safe to execute an overtaking manoeuvre in the light of data from the surroundings. The system detects whether there is enough space in front of vehicles ahead to be able to overtake safely.

US 20070268067 describes a method for determining the positions of vehicles detected in an area behind a vehicle. Vehicles detected are allocated traffic lanes and the method can detect when they change lanes or quickly approach. The driver can thus be warned of potentially dangerous situations.

US 20090243825 describes a warning system for a vehicle for keeping track of its position on the road, other vehicles and whether it is safe to overtake them.

WO2010001195 describes a further system used for making a lane change or an overtaking manoeuvre safer.

However, none of the solutions described above caters for traffic moving in the opposite direction in the other lane, nor situations where the number of lanes on a 2+1 road changes from two to one.

US 6624747 describes a method for preventing a collision between a vehicle and an obstacle ahead, whereby the distance between the vehicle and the obstacle, the vehicle's speed relative to the obstacle and the vehicle's speed and acceleration/retardation are detected and a collision message or a braking operation is initiated as a function of this information. However, overtaking situations are not catered for.

The object of the invention is to propose an improved traffic safety system which in particular enhances safety during overtaking.

Summary of the invention

The object described above is achieved by a safety system for a vehicle, which comprises a detection system adapted to:

-    monitoring an area around the vehicle;
-    determining the distance between the vehicle and an obstacle ahead, and a relative speed between the vehicle and said obstacle ahead, and generating an obstacle signal which indicates said distance and relative speed;
-    determining the distance between an overtaking vehicle and an obstacle ahead, and a relative speed between the overtaking vehicle and said obstacle ahead, and generating a vehicle signal which indicates said distance and relative speed. The safety system further comprises a calculation unit adapted to receiving said signals and to calculating at least one threshold value for the speed which the overtaking vehicle needs to enable it to execute an overtaking manoeuvre according to predetermined rules, to comparing the overtaking vehicle's speed with said at least one threshold value and to generating an indicating signal based on said comparison. The detection system is further adapted to detecting the lateral distance between the vehicle and the obstacle ahead, and the calculation unit is also adapted to using said lateral distance to calculate whether the speed of an overtaking vehicle is high enough to execute the overtaking manoeuvre.

The invention relates also to a safety system for a vehicle, which method comprises:

- monitoring an area around the vehicle;
- determining the distance between the vehicle and an obstacle ahead, and a relative speed between the vehicle and said obstacle ahead, and generating an obstacle signal which indicates said distance and relative speed;
- determining the distance between an overtaking vehicle and an obstacle ahead, and a relative speed between the overtaking vehicle and said obstacle ahead, and generating a vehicle signal which indicates said distance and relative speed;
- calculating at least one threshold value for the speed which the overtaking vehicle needs to enable it to execute an overtaking manoeuvre according to predetermined rules;
- comparing the overtaking vehicle's speed with said at least one threshold value;
- generating an indicating signal based on said comparison; and
- detecting the lateral distance between the vehicle and the obstacle ahead, and using said lateral distance to calculate whether the speed of an overtaking vehicle is high enough to execute the overtaking manoeuvre.

The invention makes it possible for the driver of a vehicle to become aware at an early stage that there is risk that an accident might occur during an overtaking situation. The driver is thus afforded the possibility of acting in order to avoid the situation. The driver of the overtaking vehicle may also be warned and thereby be enabled to avoid a collision.
Preferred embodiments are described in the dependent claims and the detailed description

Brief description of the attached drawings

The invention is described below with reference to the attached drawings, in which:

Figure 1 depicts a safety system according to an embodiment of the invention.
Figure 2 illustrates an example of an overtaking situation on a 2+1 road.
Figure 3 illustrates an example of an overtaking situation with a vehicle travelling in the opposite direction in the other traffic lane.
Figure 4 illustrates an example of an overtaking situation with a vehicle travelling in the opposite direction in the same traffic lane.
Figure 5 illustrates various parameters used in calculations in the invention according to an embodiment.
Figure 6 is a flowchart for a safety method according to an embodiment of the invention.

Detailed description of preferred embodiments of the invention

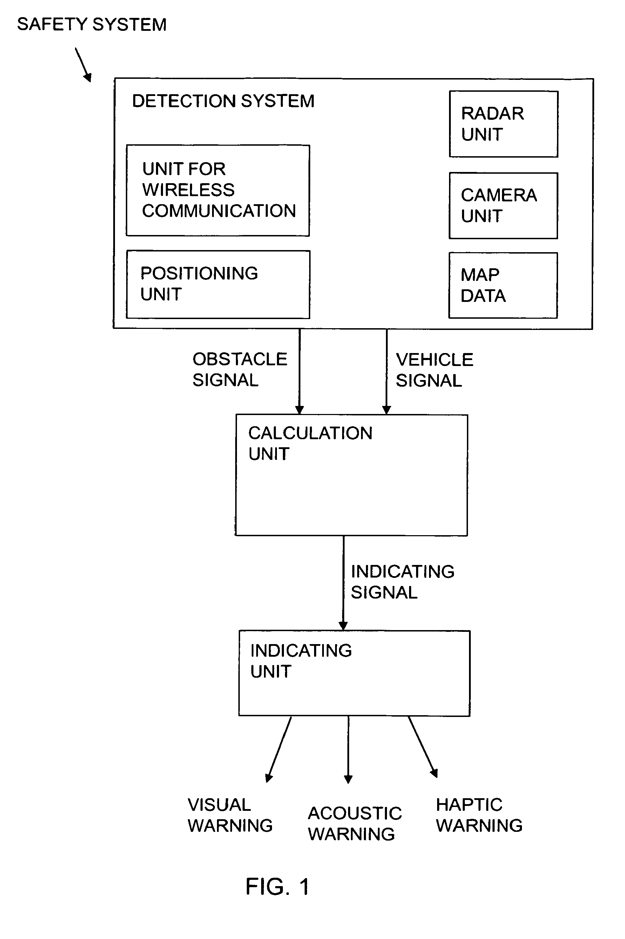

Figure 1 depicts a safety system for a vehicle. The safety system comprises a detection system adapted to monitoring an area around the vehicle. The detection system may monitor an area around the vehicle by using various techniques. The detection system comprises according to an embodiment a unit for wireless communication, e.g. via WLAN (wireless local area network), which is adapted to receiving locations and speeds of overtaking vehicles and/or obstacles ahead. Many vehicles are now equipped with such units and can exchange information with one another with regard to location, speed, vehicle-specific data etc.
The detection system may instead, or in addition, monitor the area around the vehicle by using radar. The detection system comprises according to an embodiment at least one radar unit. A radar unit may discover vehicles etc. at a distance from the driver's vehicle and detect their speeds and distances from a driver's vehicle. Detection may also be by cameras, and the detection system comprises according to another embodiment at least one camera unit. By taking pictures and processing them, a camera unit can discover vehicles etc. and determine their speeds and distances from the driver's vehicle.
The vehicle's own location may be determined by positioning by means, for example, of GPS (global positioning system) combined with map information. The detection system comprises according to this embodiment a positioning unit and map data. Detecting that the traffic environment is about to involve a critical situation may be achieved by use of positioning in combination with road maps which contain information about, for example, type of road, number of traffic lanes and/or any obstacles on carriageways. For example, the detection system may then identify when a 2+1 road changes from two lanes to one, which might constitute a critical situation.
The detection system is further adapted to determining the distance between the vehicle and an obstacle ahead, and a relative speed between the vehicle and said obstacle ahead, and to generating an obstacle signal which indicates said distance and relative speed. For an object detected to be classified as an obstacle ahead, it has according to an embodiment to be in any of the traffic lanes ahead of the vehicle.

The detection system is also adapted to determining the distance between an overtaking vehicle and an obstacle ahead, and a relative speed between the overtaking vehicle and said obstacle ahead, and to generating a vehicle signal which indicates said distance and relative speed. For an object detected to be identified as an overtaking vehicle, it has according to an embodiment to be in any of the traffic lanes around the driver's vehicle and be within a certain distance from the vehicle and/or be approaching the vehicle.

According to an embodiment, the detection system determines the speeds of the various objects detected and then calculates on the basis thereof the necessary relative speeds. According to another embodiment, the detection system detects the necessary relative speeds directly on the basis of the speed of the driver's vehicle. In a similar way, the distances between the various objects detected may be determined either from a coordinate system based on the driver's vehicle or from a coordinate system external to the driver's vehicle.

The safety system comprises also a calculation unit adapted to receiving said signals and to calculating at least one threshold value for the speed which the overtaking vehicle needs to enable it to execute an overtaking manoeuvre according to predetermined rules, to comparing the overtaking vehicle's speed with said one or more threshold values and to generating an indicating signal based on said comparison. In this way a dangerous overtaking situation may be recognised and warned of.

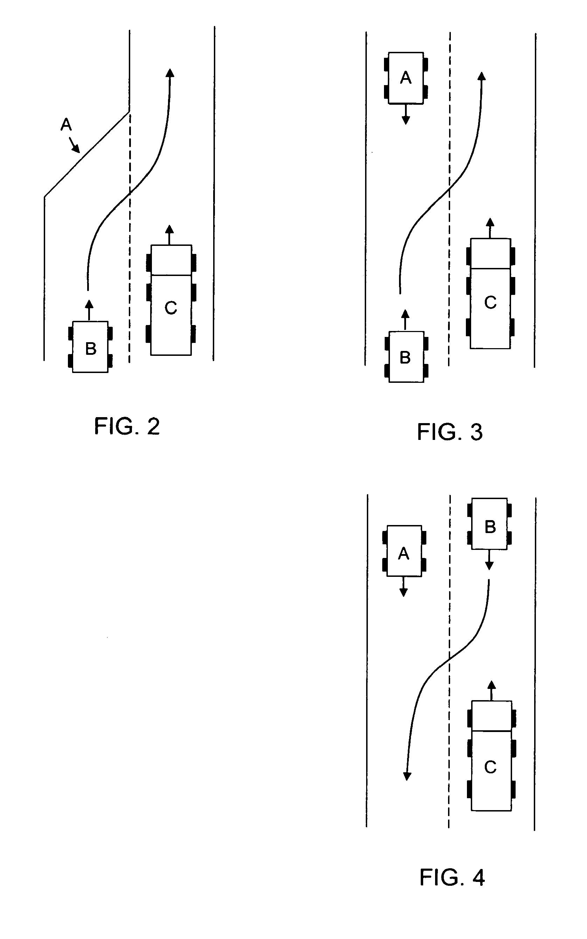

Figures 2-4 depict three examples of where a dangerous situation might arise. The broken lines at the middle of the road demarcate two traffic lanes. In Figure 2 there is a barrier, marked A in the diagram, which indicates the transition from two lanes to one. A vehicle B is about to overtake the driver's vehicle C, in this case a truck. In this situation, the barrier A is the obstacle ahead and the vehicle B is an overtaking vehicle.

According to an embodiment, the detection system is adapted to determining the distance between the vehicle and an obstacle ahead, and a relative speed between the vehicle and said obstacle, by using information about obstacles ahead from map data and the location and speed of the driver's vehicle. Map data may be used to discover in good time stationary obstacles such as a barrier at a transition from two traffic lanes to one.

Figure 3 depicts another situation in which a vehicle A is travelling in a lane used by traffic in the opposite direction. A vehicle B is about to overtake the driver's vehicle C, in this case a truck. In this situation the oncoming vehicle A is the obstacle ahead, and the vehicle B is an overtaking vehicle.

Figure 4 depicts a third situation in which a vehicle B is about to overtake a vehicle A in a lane used by traffic in the opposite direction. The vehicle B therefore risks colliding with the driver's vehicle C. In this situation the vehicle A is the obstacle ahead and the vehicle B is an overtaking vehicle.

In the examples depicted in Figures 2-4, the overtaking vehicle has begun to overtake. A vehicle approaching the driver's vehicle, or the obstacle ahead, from behind may however also conceivably wish to overtake, and such a vehicle is therefore also identifiable as an overtaking vehicle.

In all the cases described above, the safety system analyses the situation and uses data from obstacle signals and vehicle signals to calculate whether the speed of the overtaking vehicle is high enough to enable it to execute an overtaking manoeuvre without risk of collision. If the safety system judges according to predetermined rules that there is risk of a collision, an indicating signal to that effect is generated. The safety system comprises according to an embodiment an indicating system adapted to receiving said indicating signal and to generating one or more visual, acoustic or haptic warning signals. A visual warning signal may for example be presented in the instrument panel or the rearview mirror. A haptic warning signal may for example take the form of vibrations in the steering wheel or the driver's seat. The driver of the overtaking vehicle may be warned of the dangerous situation by activation of the flashers of the driver's vehicle.

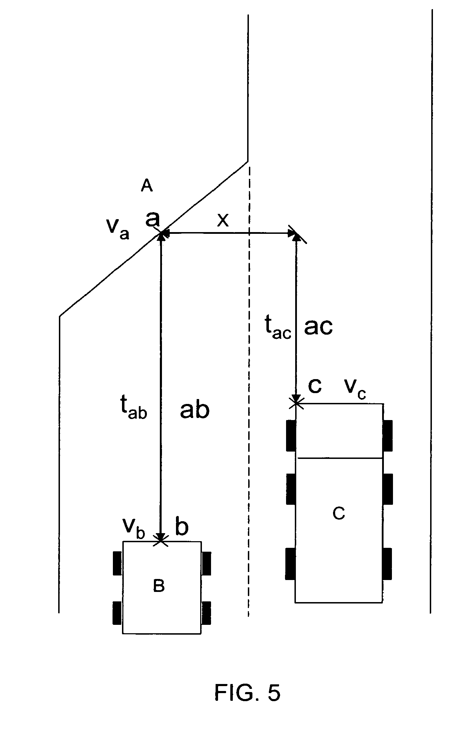

A threshold value or values for the speed of the overtaking vehicle may be calculated in various different ways. An example of threshold value calculation for the overtaking vehicle's speed will now be explained with reference to Figure 5. The various symbols used in Figure 5, which depicts the same situation as in Figure 2, are as follows:

a: location of obstacle A ahead.
b: front of overtaking vehicle B.
c: front of driver's vehicle C.
ab: distance between front b of overtaking vehicle and location a of obstacle ahead.
ac: distance between front c of driver's vehicle and location a of obstacle ahead. This distance is also the length of the gap.
x: distance between obstacle ahead and the point on the driver's vehicle which is nearest to it.
$v_a$: speed of point a.
$v_b$: speed of overtaking vehicle.
$v_c$: speed of driver's vehicle.

4

$t_{av}$: time to travel distance ab.
$t_{ac}$: time to travel distance ac.

If the situation occurs on a 2+1 road, then a is defined as the point at which the lane width becomes less than x metres. The times may be calculated according to the relationships

$$t_{ab} = \frac{ab}{v_b - v_a} \qquad (1)$$

$$t_{ac} = \frac{ac}{v_c - v_a} \qquad (2)$$

If time $t_{ab}$ is shorter than time $t_{ac}$ the overtaking vehicle B will be able to overtake without any collision occurring, resulting in the relationship

$$\frac{ab}{v_b - v_a} < \frac{ac}{v_c - v_a} \Rightarrow \quad v_b > \frac{ab}{ac} \cdot (v_c - v_a) + v_a \qquad (3)$$

If relationship (3) is not fulfilled, then the calculation unit in the safety system is adapted to generating an indicating signal. The threshold value for the overtaking vehicle's speed $v_b$ is therefore here arrived at by calculating the equation in (3).

According to an embodiment, a safety margin of y metres is added to the distance ab before ab is used for calculation. This is to ensure that the overtaking vehicle has a certain margin (y metres) when overtaking.

In the situation illustrated in Figure 3, a is defined as the front of the vehicle A travelling in the opposite direction in the other lane.

In the situation illustrated in Figure 4, a is defined as the front of the vehicle A travelling in the opposite direction in the other lane, as in Figure 3. The distance which is critical here is that between the front b of the overtaking vehicle B and the front c of the driver's vehicle C. This distance is here called bc. The time the overtaking vehicle B takes to travel the distance bc is

$$t_{bc} = \frac{bc}{v_c - v_b} \qquad (4)$$

If time $t_{bc}$ is shorter than time $t_{ac}$ the overtaking vehicle will be able to overtake without a collision occurring, resulting in the relationship

$$\frac{bc}{v_c - v_b} < \frac{ac}{v_c - v_a} \Rightarrow \quad v_b > v_c - \frac{bc}{ac} \cdot (v_c - v_a) \qquad (5)$$

Here again, if relationship (5) is not fulfilled, the calculation unit in the safety system is adapted to generating an indicating signal. The threshold value for the overtaking vehicle's speed vb is therefore arrived at by calculating the equation in (5).

The situation is analysed on the basis of the above data and knowledge of the speed of the driver's vehicle, its position (on the road and in its traffic lane) and vehicle widths.

According to an embodiment, the detection system is adapted to detecting the size of an overtaking vehicle, and the calculation unit is adapted to using said size to calculate whether the speed of an overtaking vehicle is high enough to execute the overtaking manoeuvre. The detection system may for example detect whether the overtaking vehicle is unusually long, i.e. exceeding a certain threshold value, in which case it may for example respond by adding an extra safety margin y to the calculations. If the detection system finds that the vehicle is unusually wide, it is possible in the situation illustrated in Figure 2 for the distance x to be increased by moving the point a. Similarly, y and a may be altered if the overtaking vehicle detected is smaller than one or more threshold values, e.g. if it is a motorcycle. The safety system may thus cater for the size of the overtaking vehicle to prevent the occurrence of a collision during overtaking.

According to another embodiment, the detection system is adapted to detecting the lateral distance between the vehicle and an obstacle ahead, and the calculation unit is adapted to using said lateral distance to calculate whether the speed of the overtaking vehicle is high enough to execute the overtaking manoeuvre. It is thus possible for example to determine the distance x in Figure 2.

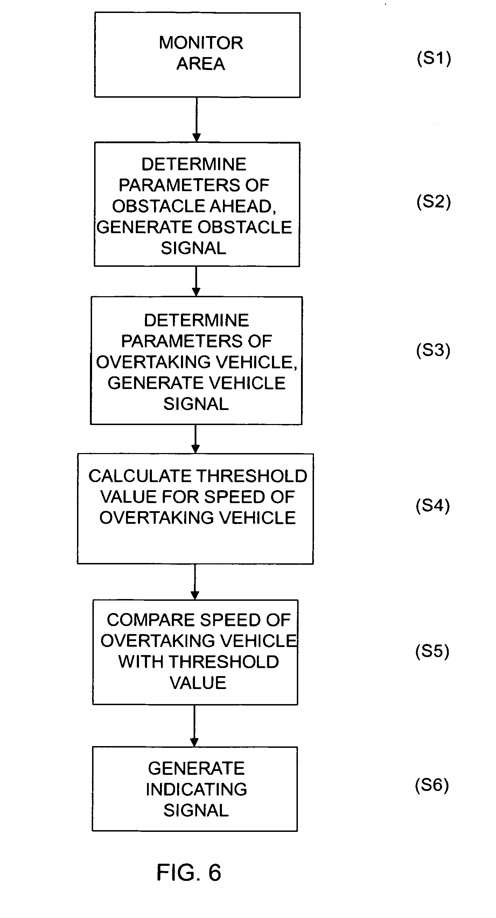

The invention relates also to a safety method for a vehicle and will now be explained with reference to Figure 6. As a first step S1, an area around the vehicle is monitored. This may for example be done by obtaining information by taking photographs, scanning with radar, receiving signals from other vehicles, e.g. via WLAN, identifying from map data where 2+1 roads change from two lanes to one, etc. The next step S2 of the method comprises determining the distance between the vehicle and an obstacle ahead, and a relative speed between the vehicle and said obstacle ahead, and generating an obstacle signal which indicates said distance and relative speed. This may be done by analysing the information obtained during the overtaking. The next step S3 comprises determining the distance between an overtaking vehicle and an obstacle ahead, and a relative speed between the overtaking vehicle and said obstacle ahead, and generating an obstacle signal which indicates said distance and relative speed. The overtaking vehicle may be in the same lane as the driver's vehicle or an adjacent lane. At step S4 the method calculates at least one threshold value for the speed which the overtaking vehicle needs to enable it to execute an overtaking manoeuvre according to predetermined rules. A predetermined rule may for example be that the overtaking vehicle has to execute the manoeuvre with a certain safety margin of y metres. At step S5 the speed of the overtaking vehicle is compared with said one or more threshold values, and at step S6 an indicating signal based on said comparison is generated. The method described makes it possible to reduce collision risk during overtaking.

According to an embodiment, the safety method comprises receiving said indicating signal in an indicating system and generating one or more visual, acoustic or haptic warning signals. It is thus possible for the driver of the vehicle to be warned, and also the driver of the overtaking vehicle.

According to another embodiment, the method comprises determining the distance between the vehicle and an obstacle ahead, and a relative speed between the vehicle and said obstacle ahead, by using information about obstacles ahead from map data and the location and speed of the driver's vehicle.

For example, information about locations of transitions from two traffic lanes to one on a 2+1 road may be taken from map data.

According to a further embodiment, the method comprises detecting the size of overtaking vehicles and using said size to calculate whether the speed of an overtaking vehicle is high enough to execute the overtaking manoeuvre. According to an embodiment, if the length of the vehicle exceeds one or more predetermined threshold values, the safety margin y is increased. If the width of the vehicle exceeds one or more predetermined threshold values, the location of the point a depicted in Figure 5 is altered. Similarly, if the size of the overtaking vehicle is below one or more predetermined threshold values, e.g. where the overtaking vehicle is a motorcycle, the safety margin y may be reduced and the location of the point a be altered.

According to yet another embodiment, the method comprises detecting the lateral distance between the vehicle and an obstacle ahead, and using said lateral distance to calculate whether the speed of an overtaking vehicle is high enough to execute the overtaking manoeuvre. It is thus also possible to detect the sideways gap between an obstacle ahead and the driver's vehicle. According to an embodiment, if the lateral distance exceeds a certain threshold value, both the overtaking vehicle and the driver's vehicle will have clearance alongside the obstacle ahead. According to an embodiment, the overtaking vehicle is then calculated to have sufficient sideways margin to execute the overtaking manoeuvre.

The invention comprises also a computer programme product comprising programme instructions for enabling a computer system in a vehicle to perform steps according to said method when those instructions are run on said computer system. The invention comprises also a computer programme product in which the instructions are stored on a medium which can be read by a computer system.

The present invention is not restricted to the embodiments described above. Sundry alternatives, modifications and equivalents may be used. The above embodiments therefore do not limit the scope of the invention, which is defined by the attached claims.

**Claims**

1. A safety system for a vehicle (C), **characterised in that** the safety system comprises:

   - a detection system adapted to:

      - monitoring an area around the vehicle;
      - determining the distance between the vehicle (C) and an obstacle ahead (A), and a relative speed between the vehicle and said obstacle ahead, and generating an obstacle signal which indicates said distance and relative speed;
      - determining the distance between an overtaking vehicle (B) and the obstacle (A) ahead, and a relative speed between the overtaking vehicle and said obstacle ahead, and generating a vehicle signal which indicates said distance and relative speed; and

   - a calculation unit adapted to receiving said signals and to calculating at least one threshold value for the speed which the overtaking vehicle (B) needs to enable it to execute an overtaking manoeuvre according to predetermined rules, to comparing the speed of the overtaking vehicle (B) with said at least one threshold value and to generating an indicating signal based on said comparison;
   - which detection system is further adapted to detecting the lateral distance between the vehicle (C) and the obstacle ahead (A), and the calculation unit is also adapted to using said lateral distance to calculate whether the speed of an overtaking vehicle (B) is high enough to execute the overtaking manoeuvre.

2. A safety system according to claim 1, which comprises an indicating system adapted to receiving said indicating signal and to generating one or more visual, acoustic or haptic warning signals.

3. A safety system according to any one of the foregoing claims, in which the detection system comprises a unit for wireless communication which is adapted to receiving locations and speeds of overtaking vehicles and/or obstacles ahead.

4. A safety system according to any one of the foregoing claims, in which the detection system comprises at least one radar unit.

5. A safety system according to any one of the foregoing claims, in which the detection system comprises at least one camera unit.

6. A safety system according to any one of the foregoing claims, in which the detection system comprises a positioning unit and map data.

7. A safety system according to any one of the foregoing claims, in which the detection system is adapted to determining the distance between the vehicle (C) and an obstacle ahead (A), and a relative speed between the vehicle and said obstacle, by using information about obstacles ahead from map data and the location and speed of the driver's vehicle.

8. A safety system according to any one of the foregoing claims, in which the detection system is adapted to detecting the size of an overtaking vehicle (B), and the calculation unit is adapted to using said size to calculate whether the speed of an overtaking vehicle is high enough to execute the overtaking manoeuvre.

9. A safety method for a vehicle (C), which method comprises:

   - monitoring an area around the vehicle;
   - determining the distance between the vehicle (C) and an obstacle ahead (A), and a relative speed between the vehicle and said obstacle ahead, and generating an obstacle signal which indicates said distance and relative speed;
   - determining the distance between an overtaking vehicle (B) and an obstacle ahead (A), and a relative speed between the overtaking vehicle and said obstacle ahead, and generating an obstacle signal which indicates said distance and relative speed;
   - calculating at least one threshold value for the speed which the overtaking vehicle (B) needs to enable it to execute an overtaking manoeuvre according to predetermined rules;
   - comparing the speed of the overtaking vehicle (B) with said at least one threshold value;

- generating an indicating signal based on said comparison; and
- detecting the lateral distance between the vehicle (C) and the obstacle ahead (A), and also using said lateral distance to calculate whether the speed of an overtaking vehicle (B) is high enough to execute the overtaking manoeuvre.

10. A safety method according to claim 9, which comprises receiving said indicating signal in an indicating system and generating one or more visual, acoustic or haptic warning signals.

11. A safety method according to claim 9 or 10, which comprises determining the distance between the vehicle (C) and an obstacle ahead (A), and a relative speed between the vehicle and said obstacle, by using information about obstacles ahead from map data and the location and speed of the driver's vehicle.

12. A safety method according to any one of claims 9 to 11, which comprises detecting the size of the overtaking vehicle (B) and using said size to calculate whether the speed of the overtaking vehicle is high enough to execute the overtaking manoeuvre.

13. A computer programme product comprising computer programme instructions for enabling a computer system in a vehicle to effect steps according to the method of any of claims 9 to 12 when those instructions are run on said computer system

14. A computer programme product according to claim 13, in which the programme instructions are stored on a medium which can be read by a computer system.

SAFETY SYSTEM

DETECTION SYSTEM

RADAR
UNIT

UNIT FOR
WIRELESS
COMMUNICATION

CAMERA
UNIT

POSITIONING
UNIT

MAP
DATA

OBSTACLE
SIGNAL

VEHICLE
SIGNAL

CALCULATION
UNIT

INDICATING
SIGNAL

INDICATING
UNIT

VISUAL
WARNING

ACOUSTIC
WARNING

HAPTIC
WARNING

FIG. 1

FIG. 2

FIG. 3

FIG. 4

FIG. 5

```
┌─────────────────────┐
│      MONITOR        │
│       AREA          │          (S1)
└─────────────────────┘
          │
          ▼
┌─────────────────────┐
│     DETERMINE       │
│   PARAMETERS OF     │
│  OBSTACLE AHEAD,    │          (S2)
│ GENERATE OBSTACLE   │
│      SIGNAL         │
└─────────────────────┘
          │
          ▼
┌─────────────────────┐
│     DETERMINE       │
│   PARAMETERS OF     │
│ OVERTAKING VEHICLE, │          (S3)
│  GENERATE VEHICLE   │
│      SIGNAL         │
└─────────────────────┘
          │
          ▼
┌─────────────────────┐
│ CALCULATE THRESHOLD │
│  VALUE FOR SPEED OF │
│ OVERTAKING VEHICLE  │          (S4)
│                     │
└─────────────────────┘
          │
          ▼
┌─────────────────────┐
│  COMPARE SPEED OF   │
│ OVERTAKING VEHICLE  │
│   WITH THRESHOLD    │          (S5)
│       VALUE         │
└─────────────────────┘
          │
          ▼
┌─────────────────────┐
│     GENERATE        │
│    INDICATING       │          (S6)
│      SIGNAL         │
└─────────────────────┘
```

FIG. 6

Europäisches
Patentamt

European
Patent Office

Office européen
des brevets

## EUROPEAN SEARCH REPORT

Application Number

EP 11 17 8813

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 956 574 A2 (HITACHI LTD [JP]) 13 August 2008 (2008-08-13) * paragraph [0022] - paragraph [0053]; figures 1-9 * | 1-14 | INV. G08G1/16 |
| X | JP 2009 023399 A (TOYOTA MOTOR CORP) 5 February 2009 (2009-02-05) * the whole document * | 1-14 | |
| A | US 2008/065328 A1 (EIDEHALL ANDREAS [SE] ET AL) 13 March 2008 (2008-03-13) * the whole document * | 1-14 | |
| A | KR 2009 0128873 A (HYUNDAI MOTOR CO LTD [KR]) 16 December 2009 (2009-12-16) * the whole document * | 1-14 | |
| A | EP 1 349 131 A1 (AISIN SEIKI [JP]; TOYOTA MOTOR CO LTD [JP]) 1 October 2003 (2003-10-01) * the whole document * | 1-14 | |

TECHNICAL FIELDS
SEARCHED (IPC)

G08G

The present search report has been drawn up for all claims

| Place of search | Date of completion of the search | Examiner |
|---|---|---|
| The Hague | 8 November 2011 | Lefèbvre, Stéphane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

EP 2 423 902 A1

## ANNEX TO THE EUROPEAN SEARCH REPORT
### ON EUROPEAN PATENT APPLICATION NO.

EP 11 17 8813

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2011

| Patent document cited in search report | | Publication date | Patent family member(s) | | Publication date |
|---|---|---|---|---|---|
| EP 1956574 | A2 | 13-08-2008 | EP 1956574 A2<br>JP 2008191781 A<br>US 2008189040 A1 | | 13-08-2008<br>21-08-2008<br>07-08-2008 |
| JP 2009023399 | A | 05-02-2009 | NONE | | |
| US 2008065328 | A1 | 13-03-2008 | US 2008065328 A1<br>US 2011071731 A1 | | 13-03-2008<br>24-03-2011 |
| KR 20090128873 | A | 16-12-2009 | NONE | | |
| EP 1349131 | A1 | 01-10-2003 | DE 60116801 T2<br>EP 1349131 A1<br>US 2004085197 A1<br>WO 0243029 A1 | | 31-08-2006<br>01-10-2003<br>06-05-2004<br>30-05-2002 |

14

**EP 2 423 902 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1502502
- EP 1887541 A
- JP 2005149402 B
- US 20070268067 A
- US 20090243825 A
- WO 2010001195 A
- US 6624747 B